# FASCICULE DE BREVET EUROPEEN

(11) **EP 2 439 440 B1**
(45) Date de publication et mention de la délivrance du brevet: **12.06.2013**
(21) Numéro de dépôt: 11184143.3
(22) Date de dépôt: 06.10.2011
(51) Int. Cl.: F16L 37/12

(54) **Dispositif de raccord avec verrouillage par griffes filetées et raccord comprenant un tel dispositif**
Anschlussvorrichtung mit Verriegelung durch Gewindegriffe, und Anschluss, der eine solche Vorrichtung enthält
Coupling device with locking by threaded clamps and coupling including such a device

(30) Priorité: 08.10.2010 FR 1058184
(43) Date de publication de la demande: 11.04.2012
(73) Titulaire: Staubli Faverges, 74210 Faverges (FR)
(72) Inventeur: Tiberghien, Alain-Christophe, 74320 SEVRIER (FR); Durieux, Christophe, 73200 GILLY SUR ISERE (FR)
(74) Mandataire: Myon, Gérard Jean-Pierre

(56) Documents cités:
- WO-A1-96/35905
- DE-A1- 2 258 316
- DE-A1- 3 639 528
- US-A- 5 209 528
- US-A- 5 927 683

## Description

La présente invention concerne un dispositif de raccord. Le domaine de l'invention est celui des connecteurs prévus pour les applications « haute pression », telles que la jonction amovible de canalisations dans lesquelles circulent des fluides gazeux et/ou liquides avec une pression de l'ordre de 10 à 250 bars.

Le document US 5,927,683 décrit un dispositif de raccord selon le préambule de la revendication 1.

EP-A-0 804 701 décrit un dispositif de raccord, comprenant un corps tubulaire et un manchon extérieur coulissant par rapport au corps. Des mors équipent le corps, duquel ils peuvent être écartés radialement pour le branchement d'un élément mâle de raccord auquel le dispositif doit être connecté. Les mors et l'élément mâle de raccord sont pourvus chacun d'un profil de prise, complémentaires l'un de l'autre, comportant des éléments de filetage. Un piston d'étanchéité, monté coulissant au centre du corps, est destiné à être appuyé contre l'élément mâle de raccord. Une bague coulissante, qui peut être déplacée axialement de façon indépendante et chargée par ressort, est disposée entre le piston d'étanchéité et les mors. Cette bague coulissante peut être engagée avec les mors, en configuration désaccouplée du dispositif, pour les maintenir en position ouverte. Egalement, la bague coulissante est montée de manière à pouvoir être déplacée, lors du couplage, ensemble avec le piston d'étanchéité, pour libérer les mors et permettre leur prise sur l'élément mâle de raccord.

Un tel dispositif présente une fiabilité insuffisante. Plus précisément, le verrouillage des profils de prise complémentaires des mors et de l'élément mâle de raccord est incertain. En effet, selon l'orientation angulaire du raccord inséré entre les mors, en butée contre le piston, lui-même en butée contre le corps, il arrive que les filets des profils en regard soient décalés axialement, ce qui provoque une fermeture incomplète des mors qui ne peuvent être recouverts par le manchon extérieur pour leur verrouillage. Si les filets des mors reposent à proximité du sommet de filets de l'élément mâle de raccord, du côté des filets tourné vers son embouchure, cet élément mâle de raccord est repoussé par le piston et se déplace axialement jusqu'à l'engrènement complet des filets et le recouvrement des mors par le manchon extérieur coulissant. En revanche, si les filets des mors reposent à proximité du sommet de filets de l'élément mâle de raccord, du côté des filets opposé à son embouchure, alors les profils de prise n'ont aucune possibilité de mouvement relatif dans le sens du verrouillage complet des mors. Dans ce cas, les mors sont au contact du corps, tandis que l'élément mâle de raccord est en butée sur le corps via le piston d'étanchéité. Les mors sont donc verrouillés de manière insuffisante, éjectés et l'élément mâle est repoussé par le piston dès que l'opérateur relâche le manchon extérieur de verrouillage du dispositif. Ainsi, dans les applications « haute pression », un tel dispositif pose un important problème de sécurité pour l'opérateur.

Le but de la présente invention est donc de proposer un dispositif de raccord adapté pour effectuer une connexion automatique avec griffes filetées, tout en améliorant la sécurité de l'opérateur et la fiabilité de la connexion.

A cet effet, l'invention selon la revendication 1 a pour objet un dispositif de raccord adapté pour transmettre des fluides gazeux et/ou liquide sous pression, ce dispositif étant configuré pour s'accoupler avec un embout de raccord muni d'un profil de prise, avec un premier élément parmi le dispositif et l'embout de raccord qui est configuré comme un élément mâle et un deuxième élément parmi le dispositif et l'embout de raccord qui est configuré comme un élément femelle, le dispositif comprenant :
- un corps tubulaire qui s'étend selon un axe longitudinal entre un côté avant tourné vers l'embout de raccord en configuration accouplée et un côté arrière tourné à l'opposé de l'embout de raccord en configuration accouplée,
- un organe de commande qui est apte à coulisser par rapport au corps tubulaire selon l'axe longitudinal,
- au moins un organe de couplage qui est positionné entre le corps et l'organe de commande et qui comporte un profil de prise complémentaire du profil de prise de l'embout de raccord, et
- des moyens élastiquement déformables qui sont aptes à repousser l'organe de commande en direction du côté avant dans une position de maintien de chaque organe de couplage verrouillé sur l'embout de raccord,
le dispositif de raccord étant caractérisé en ce qu'il comprend également des moyens élastiquement déformables qui sont aptes à repousser l'organe de couplage en direction du côté arrière dans une position où un jeu axial est défini entre chaque organe de couplage et le corps, ce jeu axial permettant un déplacement axial de chaque organe de couplage, par rapport au corps et à l'encontre des moyens élastiquement déformables agissant sur l'organe de couplage, vers une position verrouillée sur l'embout de raccord.

Ainsi, les éléments de raccord mâle et femelle peuvent être connectés de manière automatique et sécurisée pour l'opérateur. L'organe de couplage, ou chaque organe de couplage, est mobile dans la direction axiale grâce à la présence du jeu axial. De ce fait, l'actionnement du dispositif de raccord depuis la configuration désaccouplée vers la configuration d'accouplement est effectué en assurant une interaction optimale entre les profils de prise complémentaires, qui sont notamment des filets. Les moyens élastiquement déformables, à savoir un ou plusieurs ressorts, sont agencés dans le dispositif de raccord de manière à agir d'une part sur l'organe de commande et d'autre part sur l'organe de couplage. En pratique, le rattrapage axial des griffes réduit fortement les risques de blocage entre filets complémentaires, susceptible d'entraîner la rupture de la connexion et de mettre en danger l'opérateur et l'installation haute pression.

Selon d'autres caractéristiques avantageuses de l'invention, prises isolement ou en combinaison :
- le profil de prise de chaque organe de couplage et le profil de prise de l'embout de raccord sont des filetages et taraudages complémentaires, qui présentent un angle au sommet et un pas de filetage identiques, et le jeu axial est supérieur ou égal au demi-pas des filetages et taraudages ;
- le dispositif comporte une interface de contact entre l'organe de commande et chaque organe de couplage, cette interface de contact étant inclinée par rapport à l'axe longitudinal ;
- l'interface de contact définit un angle d'inclinaison par rapport à l'axe longitudinal dans un plan incluant cet axe longitudinal, et cet angle d'inclinaison est inférieur ou égal à l'angle au sommet des filetages ;
- l'interface de contact est délimitée par une surface tronconique de l'organe de commande qui définit un angle d'inclinaison par rapport à l'axe longitudinal dans un plan incluant cet axe longitudinal, et cet angle d'inclinaison est inférieur ou égal à l'angle au sommet des filetages ;
- chaque organe de couplage présente une partie élastiquement déformable, chaque partie déformable étant configurée pour déplacer radialement le profil de prise de l'organe de couplage en se déformant ;
- l'organe de couplage comprend plusieurs griffes réparties radialement autour de l'axe longitudinal et reliées à une base commune sensiblement annulaire ;
- l'organe de couplage coopère avec le corps par le biais d'une base disposée dans un logement du corps, le jeu axial étant défini entre cette base et ce logement ;
- le dispositif comporte également un piston coulissant dans le corps, une première extrémité de ce piston forme un clapet rappelé élastiquement sur un siège de clapet conformé sur le corps et une deuxième extrémité de ce piston forme une butée élastique apte à recevoir l'embout de raccord en appui axial et réaliser une étanchéité entre l'embout de raccord et le dispositif ;
- les moyens élastiquement déformables comprennent un unique ressort disposé entre l'organe de commande et l'organe de couplage, ce ressort étant apte, d'une part, à repousser l'organe de commande en direction du côté avant vers la position de maintien de chaque organe de couplage verrouillé sur l'embout de raccord et, d'autre part, à repousser l'organe de couplage en direction du côté arrière vers la position où le jeu axial est défini entre chaque organe de couplage et le corps. En variante, ces moyens élastiquement déformables comprennent d'une part, un premier ressort disposé entre le corps et l'organe de commande et apte à repousser l'organe de commande vers l'avant et, d'autre part, un deuxième ressort disposé entre le corps et l'organe de couplage et apte à repousser l'organe de couplage vers l'arrière.

Selon une première alternative, le dispositif est configuré comme un élément femelle adapté pour recevoir un embout de raccord mâle, et l'organe de commande est une bague annulaire apte à coulisser à l'extérieur du corps.

Selon une autre alternative, le dispositif est configuré comme un élément mâle adapté pour coopérer avec un embout de raccord femelle, et l'organe de commande est disposé à l'intérieur du corps et comprend, d'une part, une bague annulaire configurée pour coopérer avec l'organe de couplage et, d'autre part, une tige qui est connectée à la bague annulaire et qui est configurée pour coulisser axialement sous l'action d'un levier agencé dans le corps.

L'invention a également pour objet un raccord adapté pour transmettre des fluides gazeux et/ou liquide à haute pression selon la revendication 12. Ce raccord est caractérisé en ce qu'il comprend un dispositif de raccord tel que mentionné ci-dessus et relié à une première canalisation, et un embout de raccord qui est couplé au dispositif de raccord et relié à une deuxième canalisation.

L'invention sera mieux comprise à la lecture de la description qui va suivre, donnée uniquement à titre d'exemple non limitatif et faite en référence aux dessins sur lesquels :
- la figure 1 est une coupe axiale d'un raccord conforme à l'invention, en configuration désaccouplée, ce raccord comprenant un dispositif de raccord conforme à l'invention, configuré comme un élément femelle et adapté pour recevoir un embout mâle ;
- les figures 2 et 3 sont des vues à plus grande échelle, respectivement du détail II et du détail III à la figure 1 ;
- la figure 4 est une coupe analogue à la figure 1, montrant l'embout mâle et le dispositif de raccord en cours d'accouplement ;
- la figure 5 est une vue à plus grande échelle du détail V à la figure 4, montrant les filets complémentaires de l'embout mâle et du dispositif de raccord ;
- la figure 6 est une coupe analogue aux figures 1 et 4, montrant l'embout mâle et le dispositif de raccord dans une configuration accouplée ;
- la figure 7 est une vue en perspective d'un organe de couplage muni de griffes et appartenant au dispositif de raccord des figures 1 à 6
- la figure 8 est une coupe, analogue à la figure 4, d'un deuxième mode de réalisation d'un raccord conforme à l'invention, ce raccord comprenant un dispositif de raccord conforme à l'invention, configuré comme un élément mâle et adapté pour coopérer avec un embout femelle ;
- la figure 9 est une vue à plus grande échelle du détail IX à la figure 8, montrant les filets complémentaires de l'embout femelle et du dispositif de raccord ; et
- la figure 10 est une coupe analogue à la figure 6, montrant l'embout femelle et le dispositif de raccord dans une configuration accouplée.

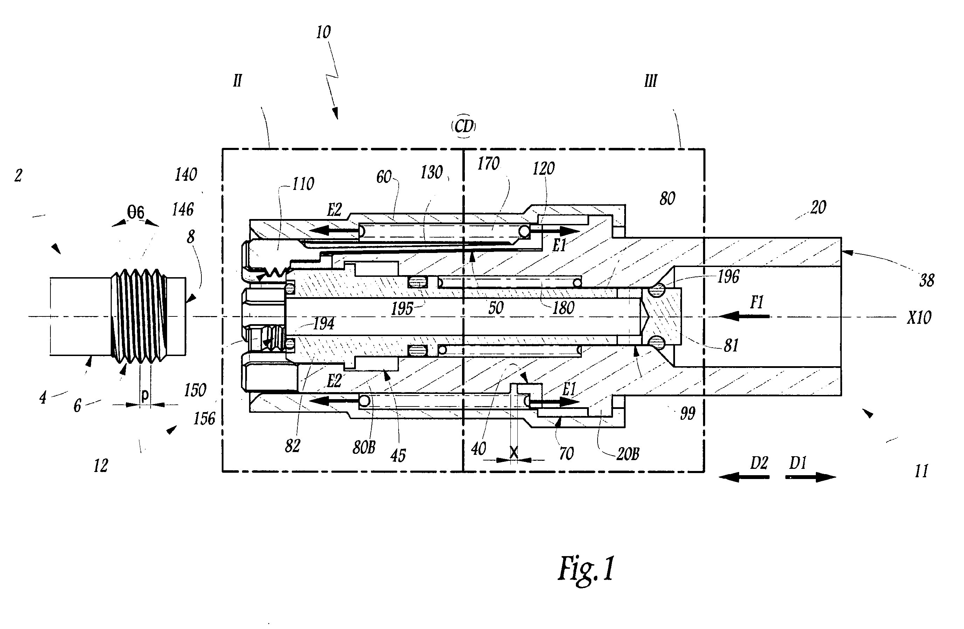

Sur les figures 1 à 7 est représenté un premier mode de réalisation de raccord R10 comprenant un dispositif de raccord 10.

Ce dispositif 10 est configuré comme un élément femelle, adapté pour recevoir un embout de raccord mâle 2. Le dispositif 10 et l'embout 2 sont les deux éléments constitutifs du raccord R10, adapté pour transmettre des fluides gazeux et/ou liquide à haute pression. Dans ce cas, le dispositif 10 est relié à une première canalisation, tandis que l'embout de raccord 2 est couplé au dispositif de raccord 10 et relié à une deuxième canalisation, ces canalisations n'étant pas représentés sur les figures 1 à 7.

Le dispositif 10 s'étend selon un axe longitudinal X10 entre un premier côté 11 opposé à l'embout 2 en configuration accouplée ou d'accouplement et un deuxième côté 12 tourné vers l'embout 2 en configuration accouplée ou d'accouplement. Les côtés 11 et 12 définissent une première direction D1 orientée vers le côté 11 depuis le côté 12 et une deuxième direction D2 orientée en sens contraire. Les directions D1 et D2 sont parallèles à l'axe X10. Le côté 11 peut être qualifié de côté arrière du dispositif 10, alors que le côté 12 est le côté avant.

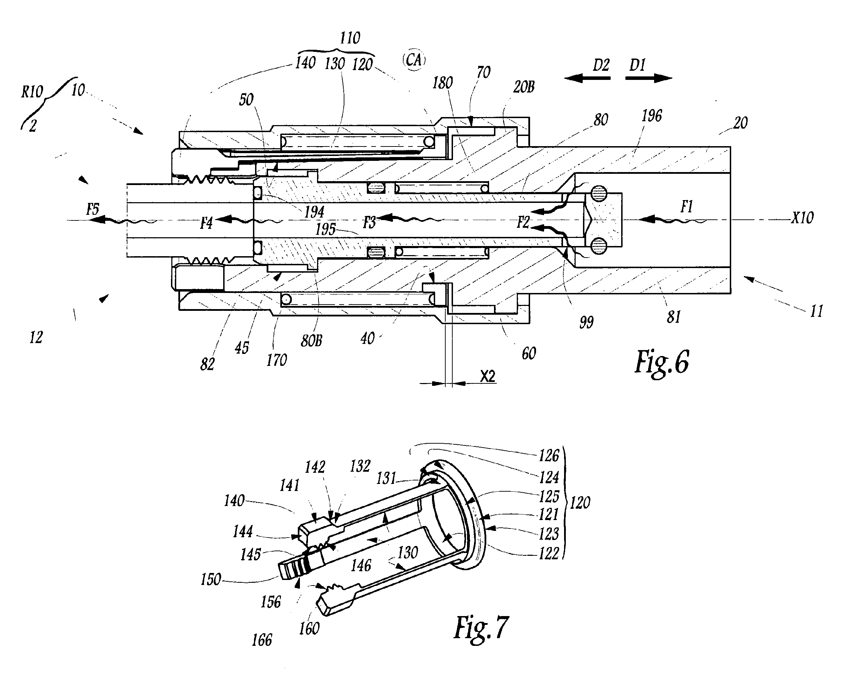

Le dispositif 10 comprend un corps 20, un organe de commande 60 et un piston intérieur 80 coulissant les uns par rapport aux autres le long de l'axe X10. Le dispositif 10 comprend également un organe de couplage 110 monobloc muni de trois griffes 140, 150 et 160, chacune étant reliée à une base annulaire 120 commune par une partie déformable 130 qui lui est propre, comme montré à la figure 7. Les éléments 20, 60, 80 et 110 présentent chacun un profil sensiblement tubulaire centré sur l'axe X10, au fait près que l'organe 110 est pourvu de trois griffes régulièrement réparties autour de cet axe.

En pratique, les griffes 140, 150 et 160 présentent conjointement un profil de prise complémentaire d'un profil de prise de l'embout mâle 2, adaptés pour réaliser l'accouplement entre, d'une part, le dispositif 10 et, d'autre part, l'embout mâle 2.

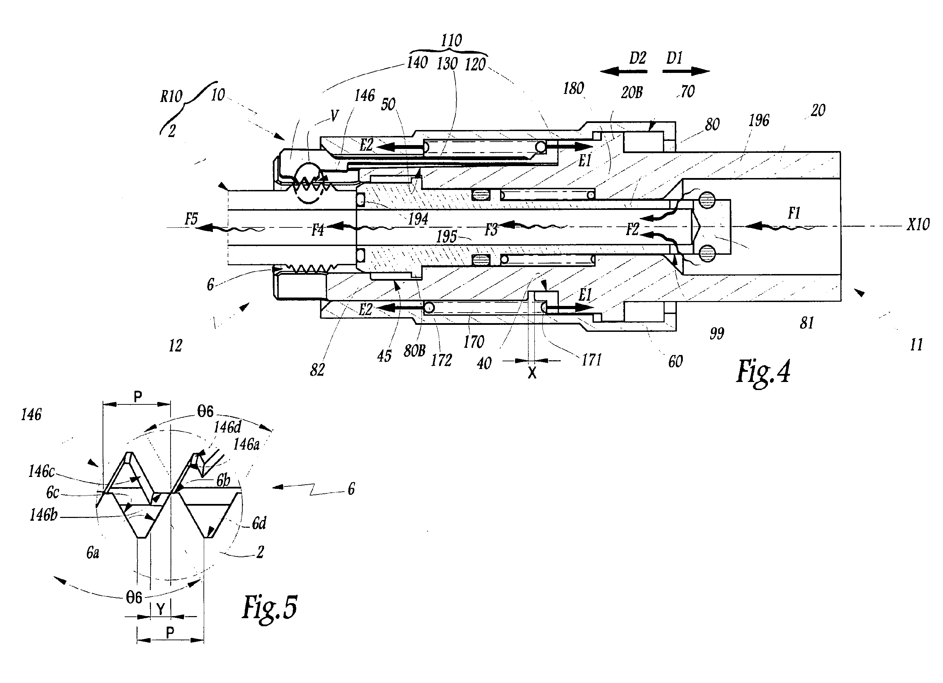

Cet embout mâle 2, centré sur l'axe X10 du dispositif 10 du côté 12 préalablement à l'accouplement, présente une surface cylindrique extérieure 4 qui s'étend suivant l'axe X10 et est munie d'une partie filetée 6. Plus précisément, cette partie filetée 6 comporte un filetage métrique ISO centré sur l'axe X10, de profil symétrique avec un angle au sommet θ6 égal à 60° et un pas P, comme détaillé ultérieurement en lien avec la figure 5. L'embout 2 présente également une surface d'extrémité 8 perpendiculaire à la surface 4. Comme il ressort des explications qui suivent, la partie 6 constitue un profil de prise pour l'embout 2.

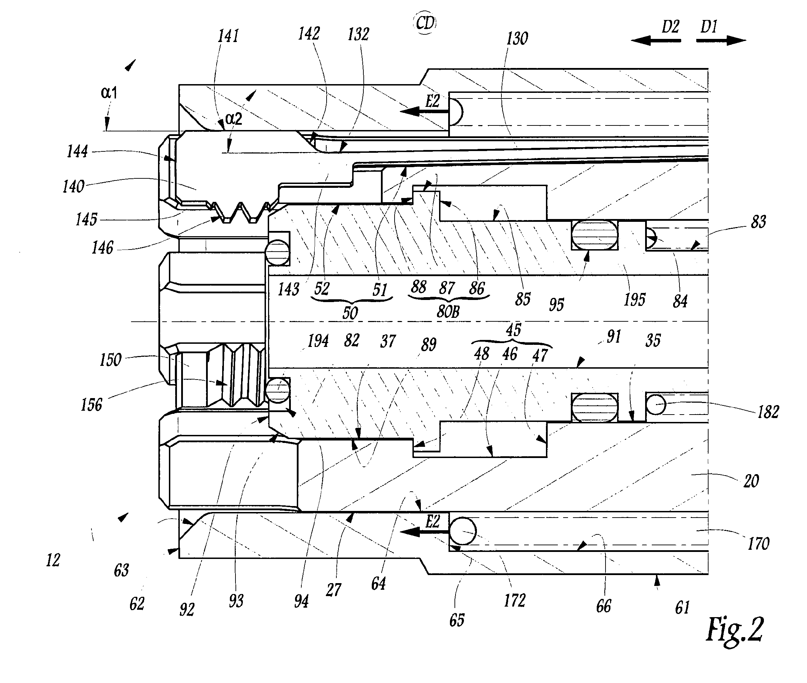

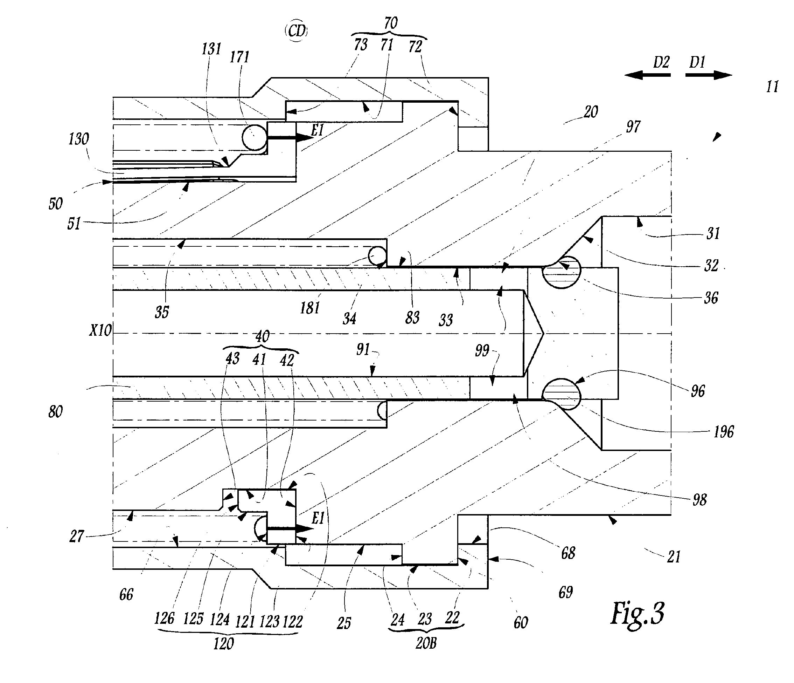

Comme visible sur les figures 2 et 3, le corps tubulaire 20 s'étend selon l'axe longitudinal X10 entre le côté avant 12 tourné vers l'embout 2 en configuration accouplée CA et le côté arrière 11 tourné à l'opposé de l'embout 2 en configuration accouplée CA. Plus précisément, le corps 20 présente des surfaces cylindriques extérieures 21, 23, 25 et 27, ainsi que des surfaces cylindriques intérieures ou alésages 31, 33, 35 et 37, qui sont coaxiales et centrées sur l'axe longitudinal X10. Une surface annulaire radiale 22 s'étend entre les surfaces 21 et 23, tandis qu'une surface annulaire radiale 24 s'étend entre les surfaces 23 et 25, perpendiculairement à l'axe X10. Les surfaces 22, 23 et 24 délimitent un épaulement 20B en saillie radiale vers l'extérieur à partir du corps 20.

Une surface tronconique 32, inclinée à 45° par rapport à l'axe X10, relie les surfaces 31 et 33, avec une arête arrondie 36 définie entre les surfaces 32 et 33. En variante, cette surface 32 peut être inclinée d'un angle différent, compris de préférence entre 30 et 60 °.

Une surface annulaire 34 s'étend radialement entre les surfaces 33 et 35. Une surface annulaire 38 relie radialement les surfaces 21 et 31 du côté 11.

En pratique, le dispositif 10 est configuré pour qu'un flux F1 de fluide gazeux et/ou liquide sous pression pénètre dans l'alésage 31 du corps 20 du côté 11, suivant la direction D2.

Par ailleurs, un premier segment de rainure 40, orienté à l'opposé de l'axe X10, c'est-à-dire formé sur l'extérieur du corps 20, est ménagé entre les surfaces 25 et 27 du corps 20, comme montré à la figure 3. Plus précisément, ce segment de rainure forme un logement 40 avec une surface de fond cylindrique 41 reliée à la surface 25 par une surface radiale 42 et reliée à la surface 27 par une surface radiale 43. Une rainure annulaire 45, orientée vers l'axe X10, c'est-à-dire formée sur l'intérieur du corps 20, est ménagée entre les surfaces 35 et 37, comme montré à la figure 2. Plus précisément, la rainure 45 comporte une surface cylindrique 46 reliée à la surface 35 par une surface radiale 47 et reliée à la surface 37 par une surface radiale 48.

En outre, le corps 20 comprend plusieurs rainures longitudinales 50, chacune comportant une partie élargie 52 traversant radialement le corps 20 et prévue pour recevoir l'une des griffes 140, 150 ou 160, ainsi qu'une partie allongée 51 ménagée sur la surface extérieure 27 et prévue pour recevoir la partie allongée 130 correspondante. Chaque rainure 50 s'étend, dans le corps 20 et suivant la direction D2, depuis le logement 40 jusqu'à déboucher du côté 12 du corps 20.

En pratique, l'organe de commande 60 est une bague extérieure au corps 20. Cette bague 60 présente une surface extérieure étagée 61 centrée sur l'axe X10, prévue pour la manipulation du dispositif 10 par l'opérateur. La bague 60 est pourvue de plusieurs alésages 64, 66 et 68. Une surface radiale 62 s'étend depuis la surface 61 en direction de l'axe X10 du côté 12 et est reliée à l'alésage 64 par une surface tronconique 63. Plus précisément, la surface 63 est orientée du côté 12 et inclinée par rapport à l'axe X10 d'un angle α1 qui est égal à 45°. Une surface radiale 65 relie les surfaces 64 et 66, tandis qu'une surface d'extrémité radiale 69 relie les surfaces 61 et 68.

En variante non représentée, l'angle α1 peut être compris entre 15° et 60°.

Une rainure annulaire 70, tournée vers l'axe X10, c'est-à-dire formée sur l'intérieur de la bague 60, est ménagée entre les surfaces 66 et 68. Plus précisément, la rainure 70 est délimitée par un alésage 71 qui définit son fond et qui est relié à la surface 66 par une surface radiale 73 et relié à la surface 68 par une surface radiale 72. En pratique, cette rainure 70 est configurée pour recevoir l'épaulement 20B du corps 20 : la surface 23 coulisse dans l'alésage 71, la surface 22 peut venir en butée contre la surface 72 dans la direction D1, tandis que la surface 24 peut venir en butée contre la surface 73 dans la direction D2.

Le piston 80 présente une première extrémité 81 conformée en clapet du côté 11 et une deuxième extrémité 82 conformée en butée élastique du côté 12, prévue pour recevoir en appui la surface 8 de l'embout mâle 2. Le piston 80 présente des surfaces cylindriques extérieures 83, 85, 87 et 89 qui s'étendent autour de l'axe X10. Une surface radiale 84 relie les surfaces 83 et 85, une surface radiale 86 relie les surfaces 85 et 87 et une surface radiale 88 relie les surfaces 87 et 89. Comme montré à la figure 2, les surfaces 86, 87 et 88 forment un épaulement 80B en saillie radiale vers l'extérieur à partir du piston 80.

Un ressort 180 est agencé entre le corps 20 et le piston 80, avec une première extrémité 181 en appui contre la surface 34 et une deuxième extrémité 182 en appui contre la surface 84.

Le piston 80 peut donc coulisser axialement dans le corps 20, avec l'épaulement 80B qui vient en butée dans la rainure 45. Plus précisément, la surface cylindrique 85 coulisse dans l'alésage 35. La surface 86 peut venir en butée contre la surface 47 sous la poussée de l'embout 2 sur l'extrémité 82 dans la direction D1, tandis que la surface 88 peut venir en butée contre la surface 48 sous l'action du ressort 180 dans la direction D2.

Le piston 80 présente également, du côté de l'extrémité 82, une surface radiale annulaire 92 qui est reliée à la surface 89 par une surface tronconique inclinée 93. Une rainure annulaire 94 est ménagée dans l'extrémité 82 sur la surface 92 et configurée pour recevoir un joint torique 194. Une rainure annulaire 95 est ménagée dans le piston 80 depuis la surface 85 et configurée pour recevoir un joint torique 195 d'étanchéité entre les surfaces 85 et 35. Une rainure annulaire 96, de forme concave arrondie, est ménagée à l'extrémité 81 depuis la surface 83 et configurée pour recevoir un joint torique 196.

Par ailleurs, le piston 80 présente un alésage 91 centré sur l'axe X10, qui est débouchant à l'extrémité 82 et non débouchant à l'extrémité 81. Comme montré à la figure 3, le piston 80 est traversé diamétralement par un alésage cylindrique 99, qui traverse l'alésage axial 91 et débouche de part et d'autre de la surface 83, formant ainsi deux ouvertures cylindriques 97 et 98 entre l'alésage 91 et l'extérieur du piston 80. Les ouvertures 97 et 98 sont prévues pour l'entrée du flux de fluide F1 dans l'alésage 91 lorsque le piston 80 est déplacé dans la direction D1 et décalé axialement de son siège formé par l'arête 36.

En effet, lorsque le piston 80 est déplacé au maximum dans la direction D2 sous l'action du ressort 180, le joint 196 est appuyé contre l'arête 36 et empêche l'écoulement de fluide sous pression depuis l'alésage 31 vers l'alésage 91. En revanche, lorsque le piston 80 est déplacé dans la direction D1, c'est-à-dire lorsque la surface 8 de l'embout mâle 2 appuie sur l'extrémité 82 du piston 80 et le déplace, le joint 196 n'est plus appuyé sur l'arête 36 et le flux F1 s'écoule librement dans l'alésage 91 par les ouvertures 97 et 98 de l'alésage 99. Dans ce cas, les joints d'étanchéité 194 et 195 réalisent l'étanchéité du dispositif 10.

Ainsi, comme montré aux figures 4 et 6, le flux de fluide F1 arrive dans le dispositif 10 par l'intérieur de l'alésage 31, pénètre dans le piston 80 par les ouvertures 97 et 98 sous forme d'un flux F2, traverse le piston à l'intérieur de l'alésage 91 sous forme d'un flux F3, passe du dispositif 10 à l'embout 2 au niveau de l'extrémité 82 sous forme d'un flux F4, et poursuit son écoulement dans l'embout 2 sous forme d'un flux F5.

Comme montré à la figure 3, la base annulaire 120 de l'organe de couplage 110 présente une surface cylindrique extérieure 121, un alésage 122, ainsi qu'une deuxième surface cylindrique extérieure 125 dont le diamètre est intermédiaire par rapport aux diamètres des surfaces 121 et 122. La base annulaire 120 présente également une surface radiale 123 qui relie les surfaces 122 et 121 du côté 11. Enfin, la base annulaire 120 présente une surface radiale 124 qui relie les surfaces 121 et 125 et une surface radiale 126 qui relie les surfaces 122 et 125, du côté 12.

En pratique, la base annulaire 120 est logée dans le logement 40 du corps 20. Des moyens élastiquement déformables, tel un ressort 170, sont agencés entre la bague 60 et l'organe de couplage 110. Plus précisément, ce ressort 170 présente une première extrémité 171 en appui contre la surface 124 de la base annulaire 120 et une deuxième extrémité 172 du ressort 170 en appui contre la surface 65.

En configuration désaccouplée CD du dispositif 10, le ressort 170 repousse la surface 123 sur l'arrière selon la direction D1, contre la surface 42. La longueur axiale, mesurée parallèlement à l'axe X10, de l'alésage 122 est strictement inférieure à la longueur axiale de la surface 41 qui forme le fond du logement 40. Ainsi, un jeu axial X est défini entre l'organe de couplage 110 et le corps 20. Plus précisément, ce jeu axial X est défini sur l'avant entre la surface 126 et la surface 43 lorsque le ressort 170 plaque les surfaces 123 et 42 l'une contre l'autre. Ce jeu axial X permet, en cours d'accouplement, un déplacement axial vers l'avant de l'organe de couplage 110 vers une position verrouillée sur l'embout 2, dans laquelle l'organe de couplage 110 est maintenu en prise sur l'embout de raccord 2.

En variante non représentée, le jeu axial X est défini selon une construction différente de celle décrite ci-dessus et illustrée aux figures 1 à 7. Autrement dit, dans ce cas le jeu X n'est pas défini au niveau de la base annulaire 120, et l'organe 110 coopère avec le corps 20 par des moyens différents. Par exemple, cette coopération peut être réalisée au niveau de la partie déformable 130, avec une saillie radiale de cette partie 130 qui est disposée dans un logement, similaire au logement 40, du corps 20. Selon un autre exemple, correspondant à une construction inversée par rapport à celle représentée aux figures 1 à 7, l'organe 110 peut être muni d'un logement dans lequel est positionnée, avec jeu axial , une saillie radiale du corps 20. Le jeu axial X correspondant à la différence de longueurs axiales entre le logement et la saillie radiale est alors situé sur l'arrière de cette saillie radiale et permet, en cours d'accouplement, un déplacement axial vers l'avant de l'organe de couplage 110 vers sa position verrouillée en prise sur l'embout de raccord 2.

Comme mentionné ci-dessus, chaque partie déformable 130 de l'organe 110 est logée et donc guidée latéralement dans une rainure 50. Plus précisément, chaque partie déformable 130 s'étend axialement depuis la base annulaire 120 au niveau d'une première extrémité 131, et est rattachée aux griffes 140, 150 et 160 au niveau d'une deuxième extrémité 132.

Seule la griffe 140 est décrite en détail ci-après, les griffes 150 et 160 présentant une construction identique.

La griffe 140 présente une surface cylindrique extérieure 141, qui peut coulisser dans l'alésage 64 de la bague 60. Une surface tronconique 142 relie la surface 141 à l'extrémité 132 de la partie déformable 130. Cette surface 142 est orientée côté 11 et inclinée d'un angle α2 par rapport à l'axe X10. L'angle d'inclinaison α2 de la surface 142 est défini en fonction de l'angle d'inclinaison α1 de la surface 63, pour permettre aux surfaces 63 et 142 de coopérer et transmettre des efforts axiaux et radiaux entre la bague 60 et la griffe 140. De préférence, les angles α1 et α2 sont égaux entre eux et égaux à 45°. Une interface de contact 60/140 est définie entre la bague 60 et la griffe 140, cette interface 60/140 correspondant à la surface de glissement entre la bague 60 et la griffe 140 qui est donc inclinée d'un angle α1 ou α2. Ainsi, lorsque la surface 63 de la bague 60, repoussée par le ressort 170 selon la direction D2, glisse sur la surface 142, la bague 60 peut déplacer la griffe 140, d'une part, axialement selon la direction D2 en faisant coulisser la base annulaire 120 dans le logement 40 à l'encontre du ressort 170 et, d'autre part, radialement en déformant la partie 130 vers l'axe X10.

En variante non représentée, seul un élément parmi la bague 60 et la griffe 140 comporte une surface inclinée 63 ou 142. En pratique, dans ce cas également, la bague 60 peut déplacer axialement et radialement la griffe 140. L'interface de contact 60/140 est délimitée par la surface 63 ou 142 qui est inclinée, sur laquelle le glissement entre les éléments 60 et 140 se produit.

En outre, une partie renforcée 143, d'épaisseur radiale augmentée, est prévue entre l'extrémité 132 et la griffe 140 afin de renforcer la liaison entre la griffe 140 et la partie déformable 130 lorsque la surface 63 appuie sur la surface 142. En particulier, cette partie 143 est logée dans la partie élargie 52 de la rainure 50.

La griffe 140 présente également une surface annulaire radiale d'extrémité 144 qui relie la surface 141 à une surface intérieure 145 de la griffe 140, tournée vers l'axe X10. Cette surface 145 comporte un profil de prise conformé comme une portion de taraudage 146.

Comme visible aux figures 1, 2 et 7, la griffe 150 présente un profil de prise conformé comme une portion de taraudage 156. De même, comme visible à la figure 7, la griffe 160 présente un profil de prise conformé comme une portion de taraudage 166. Ainsi, les taraudages 146, 156 et 166peuvent venir en prise avec le filetage complémentaire 6 de l'embout mâle 2. Plus précisément, comme les portions de taraudage 146, 156 et 166 des griffes 140, 150 et 160 ne forment pas un taraudage développé à 360° autour de l'axe X10, le profil de prise formé par ces portions de taraudage vient en prise sur une partie seulement du filetage 6, ce qui est suffisant pour verrouiller le dispositif 10 sur l'embout mâle 2. En pratique, les portions de taraudage 146, 156 et 166 sont usinées au cours d'une même opération pour conserver l'hélice du taraudage des griffes 140, 150 et 160 en position verrouillée.

Comme montré à la figure 5, le filetage 6 et le taraudage 146 présentent un pas P et un angle au sommet θ6 qui sont respectivement identiques. Le filetage 6 comporte une surface de sommet 6b reliant une surface latérale de filet 6a tournée à l'opposé de la surface 8 et une surface latérale de filet 6c tournée vers la surface 8. Le filetage 6 comporte également une surface de fond 6d reliant les deux surfaces latérales de filets opposées 6a et 6c. De manière analogue, le taraudage 146 comporte une surface de sommet 146b reliant une surface latérale de filet 146a tournée vers le côté 11 et une surface latérale de filet 146c tournée vers le côté 12. Le taraudage 146 comporte également une surface de fond 146d reliant les deux surfaces latérales de filets opposées 146a et 146c.

En pratique, en engrènement complet, c'est-à-dire lorsque le dispositif 10 est verrouillé sur l'embout mâle 2, les surfaces 6a et 146a, 6b et 146b, 6c et 164c, 6d et 146d se font respectivement radialement face. En particulier, les surfaces 6a et 146a sont en appui l'une contre l'autre. Les surfaces 6b et 146b, considérées dans un plan incluant l'axe X10, sont parallèles entre elles et à l'axe X10 en engrènement complet. Ces surfaces 6b et 146b sont logées au fond du filet opposé lorsque les surfaces 6a et 146a sont en appui.

En position désaccouplée des figures 1 à 3, le ressort 170 interposé entre la bague de verrouillage 60 et la base annulaire 120 exerce un effort E1 dans la direction D1, qui tend à éloigner les surfaces 65 et 124 et plaquer la surface 123 sur l'arrière contre la surface 42. Les griffes 140, 150 et 160 sont repoussées en butée dans la direction D1. Dans le même temps, la bague 60 est repoussée par le ressort 170 avec un effort E2 dans la direction D2, avec la surface 72 de la rainure 70 en butée sur l'avant contre la surface 22 de l'épaulement 20B du corps 20, tandis que la surface 64 recouvre les surfaces 141 et équivalentes des griffes.

Dans ce cas, le dispositif 10 est configuré de manière que, en configuration désaccouplée CD, le jeu axial X entre les surfaces 43 et 126 soit supérieur ou égal au demi-pas P/2 des filetages 6 et 146.

Par ailleurs, l'unique ressort 170 est adapté pour fiabiliser le déplacement relatif des différents éléments du dispositif 10, comme détaillé ci-après, tout en réduisant la compacité radiale du dispositif 10.

En variante non représentée, le ressort 170 peut être remplacé par deux ressorts, un premier ressort étant disposé entre le corps 20 et la bague 60 pour repousser axialement cette bague 60 dans la direction D2, le second ressort étant prévu entre le corps 20 et les griffes 140, 150 et 160 pour repousser axialement ces griffes dans la direction D1.

Lorsque l'opérateur manipule le dispositif 10 en vue de l'accouplement, il fait coulisser la bague 60 dans la direction D1, à l'encontre de l'effort E2, ses doigts étant positionnés sur la surface 61 et le corps 20. La surface 64 glisse sur la surface 141 et la découvre, puis la surface 63 glisse sur la surface 142, celles-ci étant inclinées respectivement selon les angles α1 et α2.

Comme visible à la figure 4, les griffes 140, 150 et 160 sont alors libérées par la bague 60 et s'ouvrent élastiquement en s'écartant de l'axe X10 pour laisser le passage pour l'embout mâle 2 suivant la direction D1.

Ensuite, tout en maintenant la bague 60 en position reculée du côté arrière 11, l'opérateur rapproche le dispositif 10 de l'embout mâle 2 selon l'axe X10, jusqu'à ce que la surface 8 de l'embout mâle 2 vienne en butée contre l'extrémité 82 du piston 80 qui se déplace à l'encontre de l'action du ressort 180 et forme une butée élastique. L'étanchéité est alors assurée entre les surfaces 8 et 92 grâce au joint frontal 194.

En rapprochant davantage le dispositif 10 et l'embout 2, l'opérateur fait coulisser le piston 80 dans le corps 20 selon la direction D1, contre l'action du ressort 180. Le piston 80 peut coulisser jusqu'à ce que son épaulement 80B vienne en butée dans la rainure 45, avec la surface 86 en appui contre la surface 47. Dans cette configuration, l'extrémité 81 conformée en clapet est décollée de son siège en s'éloignant de la surface 32. Le joint 196 n'est plus en appui contre l'arête 36, les ouvertures 97 et 98 communiquent avec l'intérieur de l'alésage 31 et le flux de fluide F1 peut transiter vers l'embout mâle 2 selon les flux F2, F3, F4 et F5. Les joints 194 et 195 garantissent alors l'étanchéité dans le raccord R10.

A ce stade, alors que les portions de taraudage 146 et similaires sont positionnées face au filetage 6, l'opérateur relâche la bague de verrouillage 60. En alternative, de manière facultative, l'opérateur peut accompagner le déplacement de la bague 60 dans la direction D2.

Comme montré aux figures 4 et 6, illustrant le fonctionnement du dispositif 10 respectivement en cours d'accouplement et en configuration accouplée CA, la bague 60 est repoussée par l'effort E2 généré par le ressort 170 en direction des griffes 140, 150 et 160 et tend à les recouvrir. Chaque griffe 140, 150 et 160 subit alors un effort de fléchissement radial dirigé vers l'axe X10, avec la surface 63 qui appuie sur les surfaces 142. Sur la figure 6, les parties 130 sont déformées et les griffes 140, 150 et 160 se rapprochent de la surface externe 4 de l'embout mâle 2. Plus précisément, les portions de filetage 146 et similaires viennent au contact du filetage 6, c'est-à-dire que les profils de prise complémentaires viennent en contact.

Dans un but de simplification, seuls la griffe 140 et la portion de taraudage 146 sont mentionnés ci-après, étant entendu que les griffes 150 et 160 présentent un comportement similaire.

Différents cas peuvent alors survenir, lorsque le taraudage 146 appuie sur le filetage 6, pour le verrouillage de la griffe 140, sur l'embout mâle 2, comme illustré en référence à la figure 5.

Si le filetage 6 et le taraudage 146 sont d'ores et déjà parfaitement alignés, ils viennent en engrènement complet et le verrouillage est effectué. Plus précisément, les sommets de filet 6a et 146b doivent être alignés radialement avec les fonds 146d et 6d des filets correspondant, et les surfaces 6a et 146a viennent en appui l'une contre l'autre lors du rapprochement radial de la griffe 140 vers l'axe X10. Cependant, on remarque que ce cas est relativement rare.

Si la surface 146c vient au contact de la surface 6c, le taraudage 146 a tendance à venir en alignement et en engrènement complet avec le filetage 6 en repoussant l'embout mâle 2 dans la direction D2. Dans ce cas, le piston 80 coulisse légèrement dans la direction D2, les surfaces 8 et 92 restent en appui et l'étanchéité est maintenue au niveau de l'extrémité 82 conformée en butée élastique.

Si le sommet 146b vient au contact du sommet 6b, l'embout mâle 2 étant repoussé par le piston 80, dès que le sommet 146b quitte le contact du sommet 6b, le taraudage 146 peut venir se loger dans le filetage 6 selon le cas précédemment décrit, dans lequel le contact a initialement lieu entre les surfaces 6c et 146c.

En revanche, si comme illustré à la figure 5 la surface 146a du taraudage 146 appuie sur la surface 6a du filetage 6, à une distance axiale Y de la position d'alignement du taraudage 146 avec le filet 6 la plus proche, la griffe 140 doit être déplacée de cette distance Y dans la direction D2 pour aboutir à un engrènement complet. A cet effet, l'action de la bague 60 et l'action du filetage 6 sur la griffe 140 déplacent cette griffe 140, d'une part, radialement en direction de l'élément mâle 2 et, d'autre part, avec l'interface de contact 60/140 inclinée à 45°, donc inférieure à l'angle au sommet du filet qui est égal à 60°, axialement suivant la direction D2, c'est-à-dire à l'encontre de l'effort E1 exercé par le ressort 170.

En pratique, ce déplacement, simultanément radial et axial de la griffe 140, découle de la présence du jeu axial X, ainsi que de la configuration de l'interface de contact 60/140 délimitée par les surfaces 63 et 142. Le jeu X, défini sur l'avant de la base annulaire 120 dans le logement 40 en configuration désaccouplée CD, est supérieur ou égal au demi-pas P/2 du filet 6, de sorte que chaque griffe 140 et similaire peut être déplacée dans la direction D2 de X maxi pour un engrènement complet des filets 6 et 146. Pour leur part, les surfaces 63 et 142 sont inclinées à 45° selon les angles α1 et α2, cette inclinaison étant inférieure à l'angle au sommet θ6 du filet 6 qui est égal à 60° pour provoquer le déplacement axial de l'organe de couplage 110.

Lorsque l'engrènement entre chaque griffe 140, 150 et 160 et le filet 6 de l'embout mâle 2 est complet, les griffes 140, 150 et 160 sont en position verrouillée sur l'embout 2, fléchies en direction de l'axe X10 par l'intermédiaire des parties déformables 130, en prise avec le filet 6 et entourées radialement par la bague de verrouillage 60 qui les maintient en position verrouillée, avec la surface 64 qui couvre les surfaces 141 et similaires.

A ce stade, si un jeu axial X subsiste entre les surfaces 126 et 43 , par exemple si les griffes 140, 150 et 160 ont été déplacées sur l'avant avec Y< (strictement inférieur) X, alors l'ensemble comprenant l'organe de couplage 110, l'embout mâle 2 et le piston 80 est repoussé par le ressort 180 et la pression fluide dans la direction D2, jusqu'à ce que la surface 126 de la base annulaire 120 soit positionnée en butée sur l'avant contre la surface 43 de la rainure 40. Tout mouvement d'écartement entre l'embout mâle 2 et le dispositif 10 est empêché, et la configuration accouplée CA du raccord R10 ainsi obtenu présente une fiabilité importante.

Dans cette configuration, , le jeu initial X est déplacé pour former un jeu axial X2 sur l'arrière entre les surfaces 42 et 123. En outre, on remarque que le déplacement de la butée élastique formée par l'extrémité 82 du piston 80 garantit l'étanchéité du raccord R10, quel que soit le déplacement relatif de l'organe de couplage 110 par rapport au corps 20.

Dans tous les cas, entre la configuration désaccouplée CD et la configuration accouplée CA avec circulation du fluide, la position axiale de l'organe de couplage 110 par rapport au corps 20 a été déplacée dans la direction D2 de la valeur X. Cette possibilité de déplacement de l'organe de couplage 110 assure son adaptation à la position relative du filet 6 de l'embout mâle 2.

Afin de désaccoupler le raccord R10, l'opérateur tire la bague 60 vers l'arrière à l'encontre du ressort 170 : les griffes sont libérées et peuvent s'extraire du filetage 6, laissant le passage pour l'embout 2 suivant la direction D2. Aussitôt les griffes libérées, l'organe de couplage 110 est repoussé en butée sur l'arrière par le ressort 170, avec formation du jeu axial X sur l'avant de la base 120, en préparation d'un nouvel accouplement.

En variante non représentée, les griffes 140, 150 et 160 peuvent être indépendantes l'une de l'autre, chacune munie d'une base 120 qui lui est propre. Dans ce cas, les bases 120 peuvent être rattachées par un organe auxiliaire, tel l'organe référencé 16 de EP-A-0 804 701, qui maintient leur cohésion et permet leur déplacement axial coordonné dans le logement 40.

Selon une autre variante non représentée, les moyens élastiques tel que le ressort 170 agissent sur l'organe de couplage 110 par le biais d'une pièce intermédiaire. Par exemple, les moyens élastiques exercent un effort axial sur une rondelle annulaire, laquelle est disposée en appui sur sa face arrière, c'est-à-dire tournée du côté 11, sur les bases de trois griffes indépendantes.

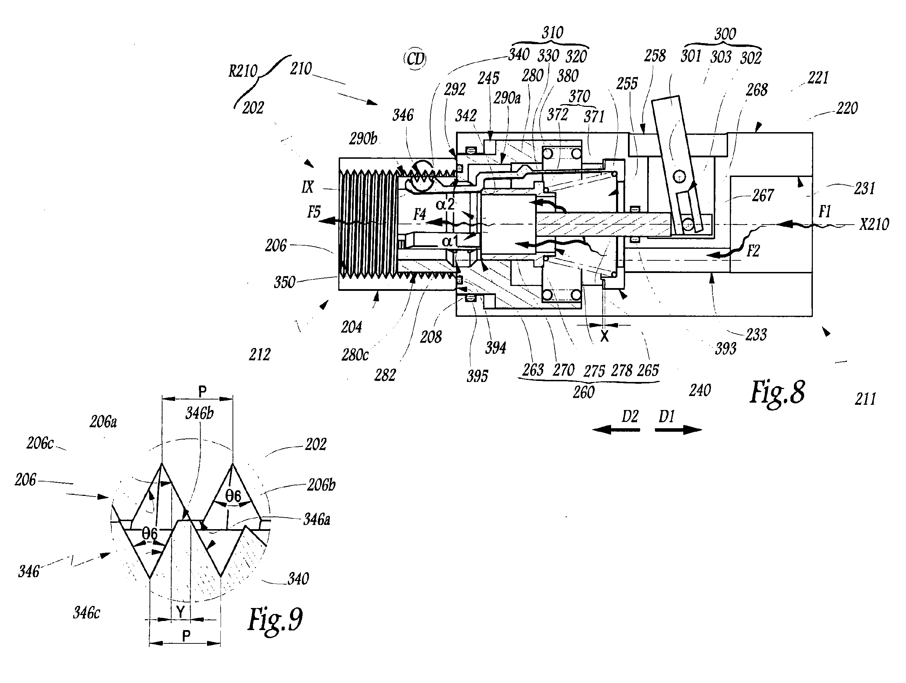

Sur les figures 8 à 10 est représenté un deuxième mode de réalisation d'un dispositif de raccord 210 selon l'invention.

Par comparaison avec le dispositif 10 du premier mode de réalisation, les différences concernent des aspects essentiellement structurels, et non fonctionnels. En effet, le dispositif 210 présente un fonctionnement similaire au dispositif 10, pour former un raccord R210 par accouplement avec un embout de raccord 202. Cependant, dans ce cas, le dispositif 210 est configuré comme un élément mâle, tandis que l'embout 202 est configuré comme un élément femelle.

Certains éléments constitutifs du dispositif de raccord 210 sont comparables aux éléments constitutifs du dispositif 10 du premier mode de réalisation, décrits plus haut, et portent les mêmes références augmentées de 200. Il s'agit de l'axe longitudinal X21 0, des côtés 211 et 212, des directions D1 et D2, du corps tubulaire 220, des rainures annulaires 240 et 245, de l'organe de commande 260, de la surface d'appui 263, du piston 280 avec son extrémité 282 conformée en butée élastique, de l'organe de couplage 310 muni d'une base annulaire 320 reliée par des parties déformables 330 aux griffes 340, 350 et 360, cette dernière n'étant pas représentée, de la surface tronconique 342, des angles α1 et α 2, de la portion de filetage 346 comportant des surfaces 346a, 346b et 346c, du ressort 370 comportant des extrémités 371 et 372, du ressort 380, des joints 394 et 395, des flux F1, F2, F3, F4 et F5, ainsi que des jeux axiaux X et X2.

En pratique, l'organe de commande 260 présente une structure différente de l'organe de commande 60 du premier mode de réalisation, qui est configuré comme une bague extérieure. En effet, l'organe 260 est monté coulissant selon l'axe X21 0 à l'intérieur du corps 220 et peut être actionné à l'aide d'un levier 300.

L'embout femelle 202, positionné centré selon l'axe X21 0 du dispositif 210 du côté 212 préalablement à l'accouplement, présente une surface cylindrique extérieure 204 et une surface interne taraudée 206, qui s'étendent parallèlement suivant l'axe X210. L'embout 202 présente une surface d'extrémité 208 qui s'étend radialement entre les surfaces 204 et 206 du côté tourné vers le dispositif 210.

Plus précisément, le taraudage 206 comporte un filetage métrique avec un angle au sommet θ6 égal à 60° et un pas P, comme montré à la figure 9. Le taraudage 206 comporte une surface de sommet 206b reliant une surface latérale de filet 206a tournée à l'opposé de la surface 208 et une surface latérale de filet 206c tournée vers la surface 208. Au fond du taraudage 206 tourné vers l'axe X210, les deux surfaces latérales de filets opposées 206a et 206c sont directement reliées.

De manière analogue, la portion de filetage 346 de la griffe 340 comporte une surface de sommet 346b reliant une surface latérale de filet 346a tournée vers le côté 211 et une surface latérale de filet 346c tournée vers le côté 212. Au fond du filetage 346 tourné à l'opposé de l'axe X210, les deux surfaces latérales de filets opposées 346a et 346c sont directement reliées.

Le corps 220 comporte une surface cylindrique extérieure 221, qui s'étend parallèlement à l'axe X210 depuis le côté 211 jusqu'au côté 212. Une ouverture 258 est ménagée dans le corps 220 depuis la surface 221. Cette ouverture 258 est prévue pour l'agencement du levier 300 dans le corps 220.

Le corps 220 comporte un alésage intérieur 231 dans lequel le flux F1 pénètre dans le dispositif 210, ainsi qu'un conduit cylindrique 233 dans lequel s'écoule le flux F2 jusqu'à une chambre 255 délimitée par les éléments 260, 280 et 310. En outre, les éléments 370 et 380 sont interposés entre les éléments 260, 280 et 310 dans cette chambre 255.

Le piston 280 est agencé dans la rainure 245 du corps 220, et peut coulisser axialement à l'encontre de l'action du ressort 380 ou en étant accompagné par ce ressort 380. Des rainures axiales 290a et 290b sont ménagées dans le piston 280, pour le positionnement des griffes 340, 350 et 360. L'extrémité 282 du piston 280 présente une partie annulaire 280C, prévue pour pénétrer dans l'embout femelle 202. Egalement, le joint torique frontal 394 est disposé dans le piston 280 au niveau de la surface radiale 292.

L'organe de commande 260 comporte une tige 265 qui est rattachée à une bague tubulaire 270 du côté 212 et qui est rattachée au levier 300 du côté 211. La bague 270 comporte un épaulement 275 en saillie vers l'extérieur par rapport à l'axe X21 0, de sorte que le ressort 370 est appuyé du côté 212 contre l'épaulement 275 et du côté 211 contre la base annulaire 320. Ce ressort 370 est un ressort conique, avec une extrémité 372 qui repousse l'organe 260 en butée vers l'avant et une extrémité 371 qui repousse l'organe 310 en butée vers l'arrière. Entre la bague 270 et la tige 265, des ouvertures 278 sont prévues pour l'écoulement du flux F3 à l'intérieur de la chambre 255 vers l'intérieur de la bague 270. Du côté 211, à l'opposé de la bague 270, la tige 265 comporte une rainure axiale 267 dans laquelle est logé un pion 268. Un joint torique 393 est positionné dans le corps 220 autour de la tige 265, afin de réaliser l'étanchéité entre l'ouverture 258 et la chambre 255.

Le levier 300 comporte une tige de manipulation 301, une rainure 302 et une articulation 303 qui forme une liaison pivot du levier 300 relativement au corps 220. Le pion 268 est agencé dans la rainure 302, de sorte qu'une rotation du levier 300 autour de l'articulation 303 déplace axialement la tige 265, le long de l'axe X210.

En déplaçant la tige 301 dans la direction D2, l'opérateur peut faire coulisser l'organe 260 dans la direction D1 en s'opposant à l'action du ressort 370, découvrir la griffe 340 pour autoriser son déplacement élastique radial vers l'axe X210, de manière à positionner l'embout femelle 202 contre le piston 280. Plus précisément, la surface taraudée 206 vient entourer la partie annulaire 280C appartenant à l'extrémité 282 du piston 280, tandis que la surface 208 vient en appui contre la surface 292. Le taraudage 206 fait face au filetage 346 de la griffe 340, qui est mobile axialement sur l'avant.

Ensuite, en déplaçant la tige 301 dans la direction D1 ou en laissant l'extrémité 372 du ressort 370 agir sur la bague 270 et la repousser vers l'avant, l'opérateur peut faire coulisser l'organe de commande 260 dans la direction D2, actionner l'organe de couplage 310 sous la poussée de la bague 270, et ainsi écarter la griffe 340 radialement, en l'éloignant de l'axe X210, pour que la portion de filetage 346 vienne au contact du taraudage 206 de l'embout femelle 202.

Comme dans le dispositif 10 du premier mode de réalisation, la surface 342 de la griffe 340 est inclinée d'un angle α2 en position verrouillée afin que la surface 342 coopère, en cours d'accouplement, avec la surface 263 de la bague 270 qui est inclinée d'un angle α1. De préférence, les angles α1 et α2 sont égaux à 45°, de manière que l'interface de contact 270/340 entre la bague 270 et la griffe 340 soit inclinée d'un angle sensiblement égal à 45° inférieur à l'angle au sommet θ2, qui est égal à 60°.

En variante non représentée, seul un élément parmi la bague 270 et la griffe 340 comporte une surface inclinée 263 ou 342. Dans ce cas, l'interface de contact 270/340 est délimitée par cette surface inclinée 263 ou 342.

En configuration désaccouplée CD, comme montré à la figure 8, le jeu axial X est prévu sur l'avant de la base annulaire 320 dans la rainure 240. Lorsque la griffe 340 vient au contact du taraudage 206, si le contact se fait sur une surface 206a du taraudage 206, la griffe 340 a une possibilité de déplacement axial de X maxi, en direction de l'embout femelle 202 et à l'encontre du ressort 370, pour un engrènement complet et un verrouillage automatique des griffes.

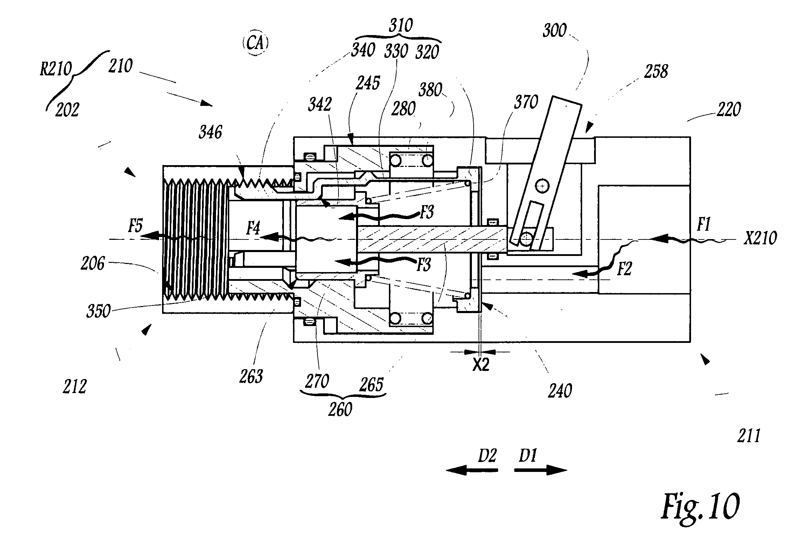

En configuration accouplée CA, comme montré à la figure 10, la bague 270 vient recouvrir la griffe 340, du coté tourné vers l'axe X210, pour maintenir la griffe 340 en position verrouillée sur le taraudage 206. Le ressort 380 et la pression du fluide en circulation amènent la base 320 en butée sur l'avant contre le corps 220, c'est-à-dire que le jeu initial X est déplacé pour former un jeu axial X2 sur l'arrière de la base 320 dans la rainure 340.

Ainsi, la griffe 340 peut être déplacée radialement et axialement, grâce à d'une part, la présence du jeu axial X et, d'autre part, la configuration de l'interface de contact 270/340 par rapport à la géométrie des filets 346 et 206.

En variante non représentée, les griffes 340, 350 et 360 peuvent être indépendantes l'une de l'autre, chacune munie d'une base 320 qui lui est propre. Dans ce cas, les bases 320 peuvent être rattachées par un organe auxiliaire, qui maintient leur cohésion et permet leur déplacement coordonné dans la rainure 240.

## Revendications

1. Dispositif de raccord (10 ; 210) adapté pour transmettre des fluides gazeux et/ou liquide sous pression, ce dispositif étant configuré pour s'accoupler avec un embout de raccord (2 ; 202) muni d'un profil de prise (6 ; 206), un premier élément (2 ; 210) parmi le dispositif et l'embout de raccord étant configuré comme un élément mâle et un deuxième élément (10 ; 202) parmi le dispositif et l'embout de raccord étant configuré comme un élément femelle, le dispositif comprenant :
- un corps tubulaire (20 ; 220) qui s'étend selon un axe longitudinal (X10 ; X210) entre un côté avant (12 ; 212) tourné vers l'embout de raccord en configuration accouplée (CA) et un côté arrière (11 ; 211) tourné à l'opposé de l'embout de raccord en configuration accouplée (CA),
- un organe de commande (60 ; 260) qui est apte à coulisser par rapport au corps tubulaire selon l'axe longitudinal,
- au moins un organe de couplage (110 ; 210) qui comporte un profil de prise (146, 156, 166 ; 346) complémentaire du profil de prise (6 ; 206) de l'embout de raccord (2 ; 202), et
- des moyens élastiquement déformables (170, 172 ; 370, 372) qui sont aptes à repousser l'organe de commande (60 ; 260) en direction (D2) du côté avant (12) dans une position de maintien de chaque organe de couplage (110 ; 310) verrouillé sur l'embout de raccord (2 ; 202),
le dispositif de raccord (10 ; 210) étant **caractérisé en ce qu'**il comprend également des moyens élastiquement déformables (170, 171 ; 370, 371) qui sont aptes à repousser l'organe de couplage (110 ; 310) en direction (D1) du côté arrière (11) dans une position où un jeu axial (X) est défini entre chaque organe de couplage (110 ; 310) et le corps (20 ; 220), ce jeu axial (X) permettant un déplacement axial de chaque organe de couplage (110 ; 310), par rapport au corps (20 ; 220) et à l'encontre des moyens élastiquement déformables (170, 171 ; 370, 371) agissant sur l'organe de couplage (110 ; 310), vers une position verrouillée sur l'embout de raccord (2 ; 202).

2. Dispositif de raccord selon la revendication 1, **caractérisé en ce que** le profil de prise (146, 156, 166 ; 346) de chaque organe de couplage (110 ; 210) et le profil de prise (6 ; 206) de l'embout de raccord (2 ; 202) sont des filetages et taraudages complémentaires, qui présentent un angle au sommet (θ6) et un pas de filetage (P) identiques, et **en ce que** le jeu axial (X) est supérieur ou égal au demi-pas (P/2) des filetages et taraudages.

3. Dispositif de raccord selon l'une des revendications précédentes, **caractérisé en ce qu'**il comporte une interface de contact (60/140 ; 270/340) entre l'organe de commande (60 ; 260) et chaque organe de couplage (110 ; 310), cette interface de contact (60/140 ; 270/340) étant inclinée par rapport à l'axe longitudinal (X10 ; X21 0).

4. Dispositif de raccord selon les revendications 2 et 3, **caractérisé en ce que** l'interface de contact (60/140 ; 270/340) définit un angle d'inclinaison (α1, α2) par rapport à l'axe longitudinal (X10 ; X210) dans un plan incluant cet axe longitudinal (X10 ; X210) , et **en ce que** cet angle d'inclinaison (α1, α2) est inférieur ou égal à l'angle au sommet (θ6) des filetages (6, 146, 156, 166 ; 206, 346).

5. Dispositif de raccord selon l'une des revendications 3 ou 4, **caractérisé en ce que** l'interface de contact (60/140 ; 270/340) est délimitée par une surface tronconique (63 ; 263) de l'organe de commande (60 ; 260) qui définit un angle d'inclinaison (α1) par rapport à l'axe longitudinal (X10 ; X210) dans un plan incluant cet axe longitudinal (X10 ; X210), et **en ce que** cet angle d'inclinaison (α1) est inférieur ou égal à l'angle au sommet (θ6) des filetages (6, 146, 156, 166 ; 206, 346).

6. Dispositif de raccord selon l'une des revendications précédentes, **caractérisé en ce que** chaque organe de couplage (110 ; 310) présente une partie (130 ; 330) élastiquement déformable, chaque partie déformable (130 ; 330) étant configurée pour déplacer radialement le profil de prise (146, 156, 166 ; 346) de l'organe de couplage (110 ; 310) en se déformant.

7. Dispositif de raccord selon l'une des revendications précédentes, **caractérisé en ce que** l'organe de couplage (110 ; 310) comprend plusieurs griffes (140, 150, 160 ; 340, 350, 360) réparties radialement autour de l'axe longitudinal (X10 ; X21 0) et reliées à une base commune (120 ; 320) sensiblement annulaire.

8. Dispositif de raccord selon l'une des revendications 1 à 7, **caractérisé en ce que** l'organe de couplage (110 ; 310) coopère avec le corps (20 ; 220) par le biais d'une base (120 ; 320) disposée dans un logement (40 ; 240) du corps, le jeu axial (X) étant défini entre cette base (120 ; 320) et ce logement (40 ; 240).

9. Dispositif de raccord selon l'une des revendications précédentes, **caractérisé en ce qu'**il comporte également un piston (80 ; 280) coulissant dans le corps (20 ; 220), **en ce qu'**une première extrémité (81 ; 281) de ce piston forme un clapet rappelé élastiquement sur un siège de clapet conformé sur le corps (20 ; 220), et **en ce qu'**une deuxième extrémité (82 ; 282) de ce piston forme une butée élastique apte à recevoir l'embout de raccord (2 ; 202) en appui axial et réaliser une étanchéité entre l'embout de raccord (2 ; 202) et le dispositif (10 ; 210).

10. Dispositif de raccord selon l'une des revendications précédentes, **caractérisé en ce que** les moyens élastiquement déformables comprennent un unique ressort (170 ; 370) disposé entre l'organe de commande (60 ; 260) et l'organe de couplage (110 ; 310), ce ressort (170 ; 370) étant apte, d'une part, à repousser l'organe de commande (60 ; 260) en direction (D2) du côté avant (12) vers la position de maintien de chaque organe de couplage (110 ; 310) verrouillé sur l'embout de raccord (2 ; 202) et, d'autre part, à repousser l'organe de couplage (110 ; 310) en direction (D1) du côté arrière (11) vers la position où le jeu axial (X) est défini entre chaque organe de couplage (110 ; 310) et le corps (20 ; 220).

11. Dispositif de raccord (10) selon l'une des revendications précédentes, **caractérisé en ce qu'**il est configuré comme un élément femelle adapté pour recevoir un embout de raccord mâle (2), et **en ce que** l'organe de commande est une bague annulaire (60) apte à coulisser à l'extérieur du corps (20).

12. Raccord (R10 ; R210) adapté pour transmettre des fluides gazeux et/ou liquide à haute pression, **caractérisé en ce qu'**il comprend :
- un dispositif de raccord (10 ; 210) selon l'une des revendications précédentes relié à une première canalisation, et
- un embout de raccord (2 ; 220) qui est couplé au dispositif de raccord (10 ; 210) et relié à une deuxième canalisation.

## Patentansprüche

1. Anschlussvorrichtung (10, 210), die angepasst ist, um gasförmige Fluids und/oder unter Druck stehende Flüssigkeit zu übertragen, wobei die Vorrichtung eingerichtet ist, um mit einem Anschlussstück (2, 202) verbunden zu sein, das mit einem Eingriffsprofil (6, 206) ausgestattet ist, wobei ein erstes Element (2, 210) von der Vorrichtung und dem Anschlussstück als ein Steckerelement eingerichtet ist und ein zweites Element (10, 202) von der Vorrichtung und dem Anschlussstück als ein Buchsenelement eingerichtet ist, wobei die Vorrichtung aufweist: ,
- einen rohrförmigen Körper (20, 220), der sich entlang einer Längsachse (X10, X210) zwischen einer Vorderseite (12, 212), die in einer Kupplungskonfiguration (CA) in Richtung zu dem Anschlussstück gerichtet ist, und einer Rückseite (11, 211), die in einer Kupplungskonfiguration (CA) entgegengesetzt zu dem Anschlussstück gerichtet ist, erstreckt,
- ein Steuermittel (60, 260), das in der Lage ist, bezüglich des rohrförmigen Körpers entlang der Längsachse zu gleiten,
- mindestens ein Kupplungsmittel (110, 210), das ein Eingriffsprofil (146, 156, 166, 346) aufweist, das komplementär zu dem Eingriffsprofil (6, 206) des Anschlussstücks (2, 202) ist, und
- elastisch verformbare Mittel (170, 172, 370, 372), die in der Lage sind, das Steuermittel (60, 260) in Richtung (D2) der Vorderseite (12) in eine Position zurückzuschieben, in der jedes Kupplungsmittel (110, 310) an dem Anschlussstück (2, 202) verriegelt gehalten wird,
wobei die Anschlussvorrichtung (10, 210) **dadurch gekennzeichnet ist, dass** sie ferner elastisch verformbare Mittel (170, 171, 370, 371) aufweist, die in der Lage sind, das Kupplungsmittel (110, 310) in Richtung (D1) der Rückseite (11) in eine Position zurückzuschieben, in der ein axiales Spiel (X) zwischen jedem Kupplungsmittel (110, 310) und dem Körper (20, 220) definiert ist, wobei das axiale Spiel (X) ein axiales Verschieben jedes Kupplungsmittels (110, 310) bezüglich des Körpers (20, 220) und gegen die elastisch verformbaren Mittel (170, 171, 370, 371), die auf das Kupplungsmittel (110, 310) einwirken, in Richtung einer Verriegelungsposition an dem Anschlussstück (2, 202) ermöglicht.

2. Anschlussvorrichtung gemäß Anspruch 1, **dadurch gekennzeichnet, dass** das Eingriffsprofil (146, 156, 166, 346) von jedem Kupplungsmittel (110, 210) und das Eingriffsprofil (6, 206) des Anschlussstücks (2, 202) ein komplementäres Außengewinde und Innengewinde sind, die einen identischen Flankenwinkel (θ6) und eine identische Gewindesteigung (P) aufweisen, und dass das axiale Spiel (X) größer oder gleich der halben Steigung (P/2) des Außengewindes und des Innengewindes ist.

3. Anschlussvorrichtung gemäß einem der vorhergehenden Ansprüche, **dadurch gekennzeichnet, dass** sie eine Kontaktschnittstelle (60/140, 270/340) zwischen dem Steuermittel (60, 260) und jedem Kupplungsmittel (110, 310) aufweist, wobei die Kontaktschnittstelle (60/140, 270/340) bezüglich der Längsachse (X10, X210) geneigt ist.

4. Anschlussvorrichtung gemäß den Ansprüchen 2 und 3, **dadurch gekennzeichnet, dass** die Kontaktschnittstelle (60/140, 270/340) bezüglich der Längsachse (X10, X210) in einer Ebene, die die Längsachse (X10, X210) einschließt, einen Neigungswinkel (α1, α2) definiert, und dass der Neigungswinkel (α1, α2) kleiner oder gleich dem Flankenwinkel (θ6) der Außengewinde (6, 146, 156, 166, 206, 346) ist.

5. Anschlussvorrichtung gemäß einem der Ansprüche 3 oder 4, **dadurch gekennzeichnet, dass** die Kontaktschnittstelle (60/140, 270/340) durch eine kegelförmige Fläche (63, 263) des Steuermittels (60, 260) begrenzt ist, die bezüglich der Längsachse (X10, X210) in einer Ebene, die die Längsachse (X10, X210) einschließt, einen Neigungswinkel ((α1) definiert, und dass der Neigungswinkel (α1) kleiner oder gleich dem Flankenwinkel (θ6) der Außengewinde (6, 146, 156, 166, 206, 346) ist.

6. Anschlussvorrichtung gemäß einem der vorhergehenden Ansprüche, **dadurch gekennzeichnet, dass** jedes Kupplungsmittel (110, 310) einen elastisch verformbaren Abschnitt (130, 330) aufweist, wobei jeder verformbare Abschnitt (130, 330) eingerichtet ist, um das Eingriffsprofil (146, 156, 166, 346) des Kupplungsmittels (110, 310) unter Sich-Verformen radial zu verschieben.

7. Anschlussvorrichtung gemäß einem der vorhergehenden Ansprüche, **dadurch gekennzeichnet, dass** das Kupplungsmittel (110, 310) mehrere Klauen (140, 150, 160, 340, 350, 360) aufweist, die radial um die Längsachse (X10, X210) herum verteilt sind und mit einer im Wesentlichen ringförmigen gemeinsamen Basis (120, 320) verbunden sind.

8. Anschlussvorrichtung gemäß einem der Ansprüche 1 bis 7, **dadurch gekennzeichnet, dass** das Kupplungsmittel (110, 310) über eine Basis (120, 320), die in einer Aufnahme (40, 240) des Körpers angeordnet ist, mit dem Körper (20, 220) zusammenwirkt, wobei das axiale Spiel (X) zwischen der Basis (120, 320) und der Aufnahme (40, 240) definiert ist.

9. Anschlussvorrichtung gemäß einem der vorhergehenden Ansprüche, **dadurch gekennzeichnet, dass** sie ferner einen Kolben (80, 280) aufweist, der in dem Körper (20, 220) gleitet, dass ein erstes Ende (81, 281) des Kolbens eine elastisch gefederte Ventilklappe an einem Ventilklappensitz ausbildet, der an dem Körper (20, 220) ausgebildet ist, und dass ein zweites Ende (82, 282) des Kolbens einen elastischen Anschlag ausbildet, der in der Lage ist, das Anschlussstück (2, 202) axial gestützt aufzunehmen und eine Dichtigkeit zwischen dem Anschlussstück (2, 202) und der Vorrichtung (10, 210) zu realisieren.

10. Anschlussvorrichtung gemäß einem der vorhergehenden Ansprüche, **dadurch gekennzeichnet, dass** die elastisch verformbaren Mittel eine einzige Feder (170, 370) aufweisen, die zwischen dem Steuermittel (60, 260) und dem Kupplungsmittel (110, 310) angeordnet ist, wobei die Feder (170, 370) in der Lage ist, einerseits das Steuermittel (60, 260) in Richtung (D2) der Vorderseite (12) in Richtung der Position zurückzuschieben, in der jedes Kupplungsmittel (110, 310) an dem Anschlussstück (2, 202) verriegelt gehalten wird, und andererseits das Kupplungsmittel (110, 310) in Richtung (D1) der Rückseite (11) in Richtung der Position zurückzuschieben, in der das axiale Spiel (X) zwischen jedem Kupplungsmittel (110, 310) und dem Körper (20, 220) definiert ist.

11. Anschlussvorrichtung (10) gemäß einem der vorhergehenden Ansprüche, **dadurch gekennzeichnet, dass** sie als ein Buchsenelement eingerichtet ist, das zum Aufnehmen eines Steckeranschlussstücks (2) angepasst ist, und dass das Steuermittel ein ringförmiger Ring (60) ist, der in der Lage ist, an der Außenseite des Körpers (20) zu gleiten.

12. Anschluss (R10, R210), der angepasst ist, um gashaltige Fluids und/oder Hochdruckflüssigkeit zu übertragen, **dadurch gekennzeichnet, dass** er aufweist:
- eine Anschlussvorrichtung (10, 210) gemäß einem der vorhergehenden Ansprüche, die mit einer ersten Rohrleitung verbunden ist, und
- ein Anschlussstück (2, 220), das mit der Anschlussvorrichtung (10, 210) gekuppelt ist und mit einer zweiten Rohrleitung verbunden ist.

## Claims

1. A connecting device (10; 210) adapted to transmit pressurized gaseous and/or liquid fluids, the connecting device being configured to be coupled with a connecting end (2; 202) provided with an engaging profile (6; 206), a first element (2; 210) among the connecting device and the connecting end being configured as a male element and a second element (10; 202) among the connecting device and the connecting end being configured as a female element, the connecting device comprising:
- a tubular body (20; 220) that extends along a longitudinal axis (X10; X210) between a front side (12; 212) facing the connecting end in the coupled configuration (CA) and a rear side (11; 211) facing opposite the connecting end in the coupled configuration (CA),
- a control member (60; 260) able to slide relative to the tubular body along the longitudinal axis,
- at least one coupling member (110; 210) that includes an engaging profile (146, 156, 166; 346) complementary to the engaging profile (6; 206) of the connecting end (2; 202), and
- elastically deformable means (170, 172; 370, 372) able to push the control member (60; 260) back toward (D2) the front side (12) in a maintenance position of each coupling member (110; 310) locked on the connecting end (2; 202),
the connecting device (10; 210) being **characterized in that** it also comprises elastically deformable means (170, 171; 370, 371) able to push the coupling member (110; 310) back toward (D1) the rear side (11) in a position where an axial play (X) is defined between each coupling member (110; 310) and the body (20; 220), the axial play (X) allowing an axial movement of each coupling member (110; 310), relative to the body (20; 220) and against the elastically deformable means (170, 171 ; 370, 371) acting on the coupling member (110; 310), toward a position locked on the connecting end (2; 202).

2. The connecting device according to claim 1, **characterized in that** the engaging profile (146, 156, 166; 346) of each coupling member (110; 210) and the engaging profile (6; 206) of the connecting end (2; 202) are complementary threads and tappings, which have an identical apical angle (θ6) and thread pitch (P), and **in that** the axial play (X) is greater than or equal to the half-pitch (P/2) of the threads and tappings.

3. The connecting device according to claim 1, **characterized in that** the connecting device has a contact interface (60/140; 270/340) between the control member (60; 260) and each coupling member (110; 310), the contact interface (60/140; 270/340) being inclined relative to the longitudinal axis (X10; X210).

4. The connecting device according to claim 3, **characterized in that** the contact interface (60/140; 270/340) is defined by a tapered surface (63; 263) of the control member (60; 260) that defines an incline angle (α1) relative to the longitudinal axis (X10; X210) in a plane including said longitudinal axis (X10; X210), and **in that** said incline angle (α1) is smaller than or equal to the apical angle (θ6) of the threads (6, 146, 156, 166; 206, 346).

5. The connecting device according to claim 2, **characterized in that** the connecting device has a contact interface (60/140; 270/340) between the control member (60; 260) and each coupling member (110; 310), the contact interface (60/140; 270/340) being inclined relative to the longitudinal axis (X10; X210), **in that** the contact interface (60/140; 270/340) defines an incline angle (α1, α2) relative to the longitudinal axis (X10; X210) in a plane including said longitudinal axis (X10; X210), and **in that** said incline angle (α1, α2) is smaller than or equal to the apical angle (θ6) of the threads (6, 146, 156, 166; 206, 346).

6. The connecting device according to one of claims 1 to 5, **characterized in that** each coupling member (110; 310) has an elastically deformable part (130; 330), each deformable part (130; 330) being configured to radially move the engaging profile (146, 156, 166; 346) of the coupling member (110; 310) by deforming.

7. The connecting device according to one of claims 1 to 5, **characterized in that** the coupling member (110; 310) comprises several claws (140, 150, 160; 340, 350, 360) distributed radially around the longitudinal axis (X10; X210) and connected to a substantially annular shared base (120; 320).

8. The connecting device according to one of claims 1 to 5, **characterized in that** the coupling member (110; 310) cooperates with the body (20; 220) via a base (120; 320) arranged in a housing (40; 240) of the body, the axial play (X) being defined between the base (120; 320) and the housing (40; 240).

9. The connecting device according to one of claims 1 to 5, **characterized in that** the connecting device also has a piston (80; 280) sliding in the body (20; 220), **in that** a first end (81; 281) of said piston forms a valve elastically returned on a valve seat formed on the body (20; 220), and **in that** a second end (82; 282) of said piston forms an elastic stop able to receive the connecting end (2; 202) bearing axially and to produce sealing between the connecting end (2; 202) and the connecting device (10; 210).

10. The connecting device according to one of claims 1 to 5, **characterized in that** the elastically deformable means comprise a single spring (170; 370) arranged between the control member (60; 260) and the coupling member (110; 310), the spring (170; 370) being able, on the one hand, to push the control member (60; 260) back toward (D2) the front side (12) toward the maintenance position of each coupling member (110; 310) locked on the connecting end (2; 202) and, on the other hand, to push the coupling member (110; 310) back toward (D1) the rear side (11) toward the position where the axial play (X) is defined between each coupling member (110; 310) and the body (20; 220).

11. The connecting device (10) according to one of claims 1 to 5, **characterized in that** the connecting is configured as a female element adapted to receive a male connecting end (2), and **in that** the control member is an annular ring (60) able to slide outside the body (20).

12. A connector (R10; R210) adapted to transmit gaseous and/or liquid fluids at high pressure, **characterized in that** the connector comprises:
- a connecting device (10; 210) according to one of claims 1 to 5 connected to a first pipe, and
- a connecting end (2; 220) that is coupled to the connecting device (10; 210) and connected to a second pipe.
